# EUROPEAN PATENT SPECIFICATION

(11) **EP 0 315 354 B1**
(45) Date of publication and mention of the grant of the patent: **24.02.1993**
(21) Application number: 88310022.4
(22) Date of filing: 25.10.1988
(51) Int. Cl.: B21D 53/04

(54) **Apparatus for and a method of securing together two generally sheet-like members**
Vorrichtung und Verfahren zum Verbinden zweier vorwiegend tafelartiger Elemente
Dispositif et procédé pour joindre deux pièces généralement tabulaires

(30) Priority: 02.11.1987 GB 8725614
(43) Date of publication of application: 10.05.1989
(73) Proprietor: BLUE CIRCLE HEATING LIMITED, Essex CM5 9RE (GB)
(72) Inventor: Webster, Dennis Malcolm, Wyton Bar Hull HU11 4DD (GB); Cheesbrough, John, Bilton Hull HU11 4EY (GB)
(74) Representative: Meeks, Frank Burton

(56) References cited:
- DE-A- 1 452 827
- DE-A- 3 004 597
- FR-A- 2 228 209
- US-A- 4 291 450

## Description

The present invention relates to an apparatus for and a method of securing together two generally sheet-like members.

In this specification "generally sheet-like member" includes a member of generally sheet form having indentations therein and/or protuberances thereon.

The invention is particularly concerned with, but not restricted to, the securing together of a prime panel and a convector panel which constitute the principal components of a convector radiator. The prime panel has manifolds extending along its longitudinal edges, and longitudinally spaced transverse waterways extending between and communicating with the manifolds. The convector panel has longitudinally spaced open-ended transverse channels extending across its entire width. The convector panel is secured to the prime panel with the longitudinal edges of the convector panel located transversely inwardly of the manifolds of the prime panel.

The convector radiator is mounted to a wall so that the convector panel is adjacent to the wall with the prime panel facing outwardly. The hot water flows through the manifolds and transverse waterways of the prime panel, and the convector panel channels guide the convected heated air into the room.

It will be appreciated that each convector panel has to be accurately positioned with respect to its associated prime panel before the two panels are secured together, for example by welding. Although this precise positioning and welding together can be carried out by hand, this technique is time-consuming and in consequence retards considerably the rate of production of the convector radiators.

Apparatus for securing together two generally sheet-like members described in the prior art portion of claim 1 is disclosed in French Patent Specification No. FR-A-2228209 in which two strips 11 and 12 are passed face to face along a single roller conveyor 23a to press 24 where both strips 11 and 12 are pressed. After each pressing stroke of the press 24 the strips continue moving along a conveyor to pass in turn, a spot welder 26, panel severing means 27, a seam welder 29 and a seam welder 31.

It is to be emphasised that FR-A-2228209 is concerned only with securing together two prime panels, and there is no disclosure of positioning and securing together prime panels and convector panels.

With the apparatus and method of FR-A-2228209, the applicants have found it impossible to press their prime panels 2 and convector panels 4 while these two panels are passing in unison face to face along a single conveyor. In consequence the invention as claimed is intended to remedy this defect by pressing the prime panels and convector panels before they are conveyed to an attachment or welding station. The applicants have devised a sophisticated transfer and positioning system in which a prime panel is conveyed to a contacting station, and a convector panel is conveyed to transfer station. These two panels are conveyed in a direction generally parallel to one another. A cross-transfer assembly then transfers the convector panel transversely with respect to the above conveying direction from the transfer station to a release station directly above the contacting station. The applicants apparatus ensures that the panels are located at the release station and contacting station respectively at the same attitude, and release means are provided to enable the convector panel to drop onto the prime panel at the contacting station. The apparatus then conveys the prime and convector panels in contact with one another to the welding or attachment station.

The advantage offered by the applicants' invention is that the pressed prime and convector panels are accurately positioned in contact with one another at the contacting station ready to be conveyed to the welding or attachment station.

According to one aspect of the present invention there is provided apparatus for securing together two generally sheet-like members wherein said apparatus includes means operable to convey said members in contact with one another to an attachment station, and means for securing together said two members at the attachment station, said apparatus being characterised by a transfer station to receive a first one of said members, a contacting station to receive a second one of said members, a first conveyor to convey the said first one of said members to said transfer station, a second conveyor spaced transversely from the first conveyor to convey intermittently said second one of said members to said contacting station, said first and second members being conveyed generally parallel to one another, a cross-transfer assembly to transfer said first member transversely with respect to said conveying direction from said transfer station to a release station directly above said contacting station, said assembly and said second conveyor being arranged to locate said first and second members at the release station and contacting station respectively at the same attitude, release means to allow the first member to drop from said assembly onto said second member at said contacting station ready to be conveyed to said attachment station, gripping means to grip said second member as it approaches said contacting station, said gripping means including means to locate the first member when it has dropped onto the second member, and descending means comprising a pivotable plate to ensure that the first member drops into the second member.

The cross-transfer assembly may comprise two longitudinal arrays of support members mounted on two pivotal longitudinal shafts carried by two transversely spaced locators. In operation, the first member is supported on the support members, and when the first member is located at the release station immediately above the second member, the shafts are pivoted to move apart the two arrays to release the first member.

According to another aspect of the present invention there is provided a method of securing together two generally sheet-like members said method including advancing said two members in unison to an attachment station, securing together said members at the attachment station, and releasing said secured members, said method being characterised by spacing said members transversely with respect to one another, feeding a first one of said members to a transfer station, intermittently feeding a second one of said members to a contacting station, said members being fed generally parallel to one another, transferring said first member transversely with respect to said feeding direction to a release station directly above said contacting station, locating the first and second members at the release station and contacting station respectively at the same attitude as one another, and allowing the first member to drop onto the second member to enable said two members to be advanced to said attachment station, gripping the second member as it approaches the contacting station, locating both the members in the correct position relative to each other as they travel from the contacting station to the attachment station, and clamping the two members at the attachment station immediately before the securing operation.

The second member may be gripped as it approaches the contacting station, and remain gripped as it advances from the contacting station to the attachment station. After the first member has dropped onto the second member at the contacting station it is located in the correct position relative to the second member as they both advance from the contacting station to the attachment station.

In this specification by "directly above" is meant that the first member is vertically above the position it is required to occupy when contacting the second member at the contacting station.

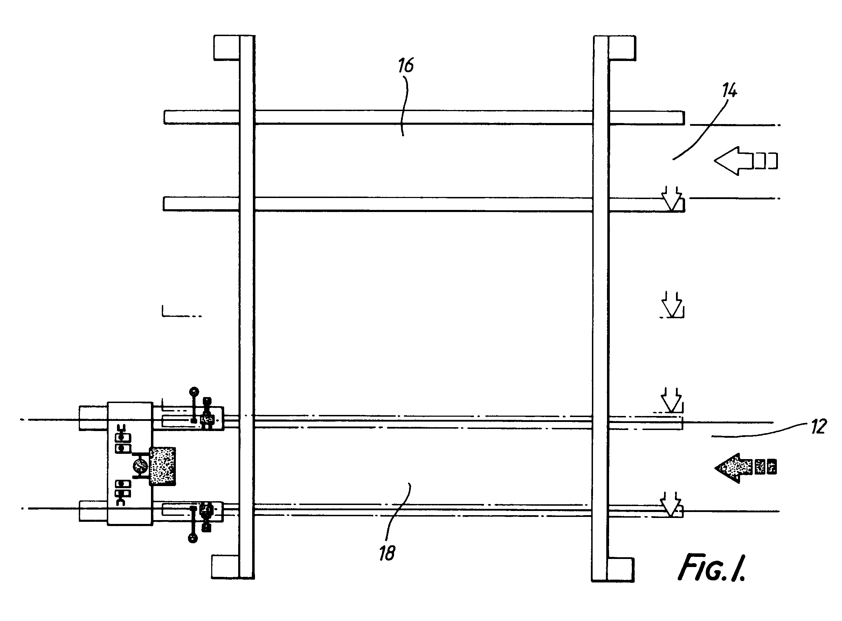

An embodiment of the invention will now be described by way of example with reference to the accompanying illustrative drawings in which:-
Figure 1 is a schematic plan view of part of apparatus for locating and welding the component panels of a convector panel radiator, and

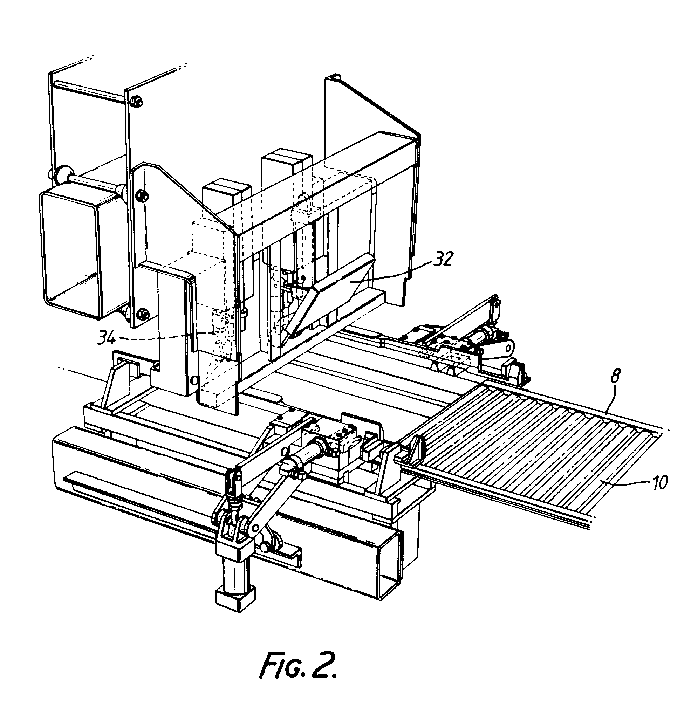

Figures 2 to 5 are perspective views of parts of the apparatus of Figure 1 showing different stages in the location and welding of the component panels of the radiator.

Referring to the drawings, a convector radiator comprises a prime panel 2 and a convector panel 4 which are spot-welded to one another.

The convector panel has a longitudinally-spaced open-ended transverse channels 6 extending across its entire width. The prime panel has manifolds 8 extending along its longitudinal edges, and longitudinally-spaced transverse waterways 10 extending between and communicating with the manifolds. The prime panel waterways 10 are of smaller cross-section than the convector panel channels 6.

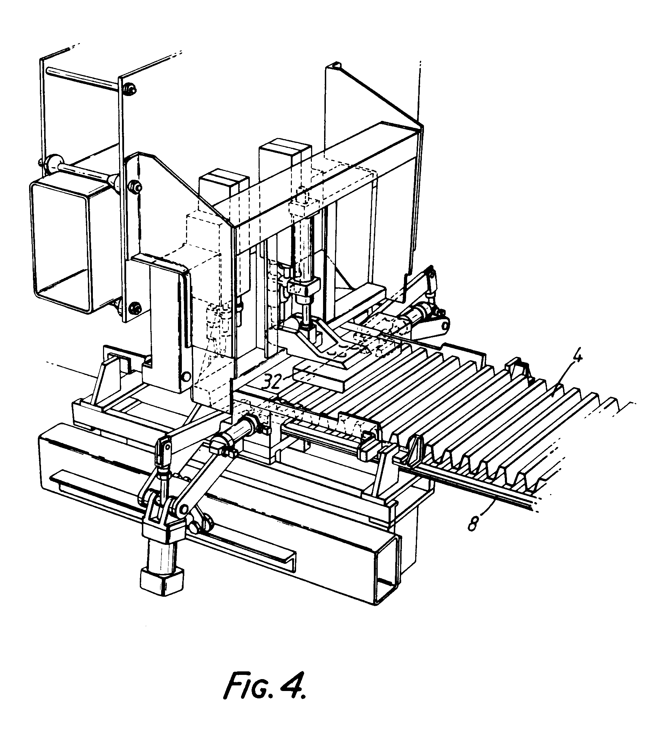

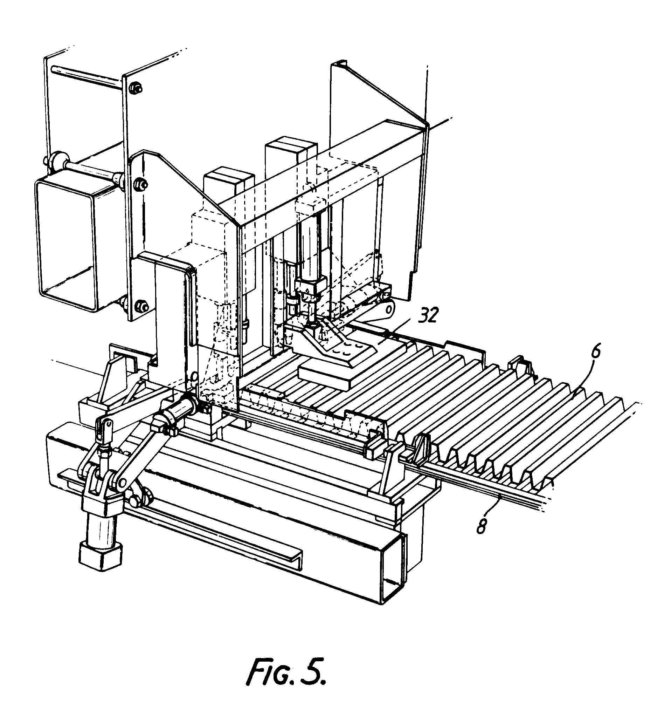

Referring particularly to Figures 4 and 5, in the assembled radiator the lower faces of the channels 6 are placed on the upper faces of the waterways 10. The panels are dimensioned so that the longitudinal edges of the convector panel 4 are laterally inside the manifolds 8 of the prime panel 2.

The prime panels are manufactured initially as a continuous strip having longitudinally spaced transverse swaged indentations where the strip will be subsequently cut into separate panels.

While the prime panels are in the form of a continuous strip they are fed intermittently along a conveyor 12. The length of each feed step is 80 mm and each step takes 0.25 seconds.

The convector panels are manufactured as a continuous strip and are cut into separate panels before being fed along a conveyor 14 transversely spaced from the conveyor 12. The length of each convector panel is related to the distance between consecutive indentations on the prime panel strip.

The apparatus illustrated in the drawings comprises the following four units:-

### (1) Cross-Transfer Assembly

This assembly transfers each convector panel from a transfer station 16 at the outlet of the conveyor 14 to a release station 18 directly above a contacting station on the conveyor 12.

### (2) Conveyors

These conveyors 14 and 12 support and guide each conveyor panel and prime panel respectively as they are fed towards the contacting station.

### (3) Gripper Units

There are two of these units, one on each side of the conveyor 12. These units correctly locate the convector panel on the prime panel and feed the two panels along the conveyor, and

### (4) Spot-Welding Unit

This unit tack-spot-welds each convector panel onto its associated prime panel in preparation for the complete spot-welding operation which is carried out on another machine.

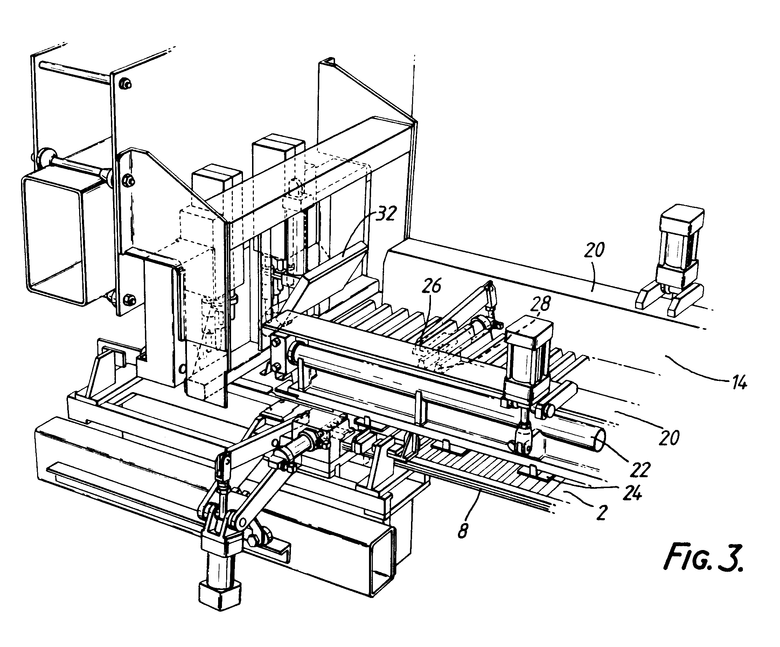

Referring to Figure 3, the cross-transfer assembly includes a frame comprising two beams 20 which act as side locations for the convector panel. Each beam supports a longitudinal shaft 22 which can be pivoted relative to its respective beam by a pneumatic cylinder. A plurality of longitudinally spaced support plates 24 are mounted on their respective shafts 22 and are located in a horizontal plane beneath the shafts. A location finger is positioned at the forward end of each shaft, and is operable to fit into a side profile of the convector panel in the frame.

The convector panel has its lower face resting on the plates 24, and it is located laterally by the side beams 20. The convector panel is located longitudinally by the location fingers which enter the side profiles at the forward end of the panel.

The cross-transfer assembly, housing the convector panel then moves laterally from the transfer station at the outlet of the conveyor 14 to the release station illustrated in Figure 3 directly above the prime panel conveyor 12.

This lateral transferring of the convector panel is carried out in three stages of movement the last of which stages is carried out as described.

As the prime panel continuous strip is fed along the conveyor 12 the foremost indentation passes a detector which registers its presence as it approaches a position directly beneath the forward end of the convector panel in the cross-transfer assembly.

On further forward movement of the prime panel strip the foremost indentation enters pneumatically operable gripper units which are free to move along slideways in the direction of movement of the prime panel strip.

The gripper units and their associated slideways are located one on either side of the conveyor 12. Each gripper unit has a swage clamp finger 26 at its end shaped to make a close fit with the indentation in the prime panel, and a double finger arrangement 28 adapted for location in the channels 6 of the convector panel.

On further forward movement of the foremost prime panel, the swage clamp fingers 26 lock into the foremost indentation thereby attaching the gripper units to the prime panel so that the gripper units and foremost prime panel move forward together. Immediately the gripper units lock onto the prime panel the double finger arrangements 28 extend inwardly with respect to the conveyor.

After the prime panel has moved forward a distance of one feed, the shafts 22 of the cross-transfer assembly rotate to move apart the support plates 24 thereby allowing the convector plate to drop onto the prime panel at the contacting station. The convector panel falls between location bars positioned on opposite sides of the conveyor 12 so as to provide a side location for the convector panel.

The release station is positioned, and the release of the convector panel from the cross-transfer assembly is timed, so that the two foremost transverse channels of the convector panel drop onto respective ones of the two fingers 28 of the double finger gripper units.

This locates the convector panel at the correct longitudinal position with respect to the prime panel.

Immediately after the convector panel has been released from the cross-transfer assembly, a descend plate 32 pivotally mounted to an upright frame of the apparatus, pivots downwardly to ensure that the convector panel drops onto the prime panel at the contacting station. When this plate is in its fully descended position illustrated in Figures 4 and 5, indicating that the convector panel has dropped clear of the cross-transfer assembly, then this assembly returns to the transfer station to collect the next subsequent convector panel from the conveyor 14.

The prime panel and the convector panel are fed along the conveyor 12 from the contacting station to the attachment station. These panels are correctly positioned longitudinally by the gripper units, and the convector panel is guided laterally by the location bars positioned one on either side of the conveyor 12. The prime panel is guided by the rollers of the conveyor 12 which are profiled to match the prime panel manifold shape. The location bars converge as they extend from the contacting station to the attachment station so as to provide a progressively more accurate lateral location for the convector panels approaching the attachment station.

Two pairs 34 of hydraulically operable spot-welding guns are located so as to extend downwardly onto the forward edge region of the plates at the attachment station. These guns are transversely adjustable so that they can be positioned at a preselected constant distance laterally inwardly from the longitudinal edges of a prime panel having any width within a suitable range.

A spring-loaded finger descends slightly in advance of the spot-welding guns to locate and clamp the convector panel on the prime panel immediately before the welding operation commences. This finger works in conjunction with the location fingers 28 to hold the convector panel accurately in position during the welding operation on the edge of the first transverse channel of the convector panel.

The leading edge of the convector panel arrives at the spot-welding region of the apparatus two feeds after the convector panel has been dropped onto the prime panel at the contacting station.

Immediately after the forward edge of the convector panel has been spot-welded to the prime panel, the clamp and location fingers on the gripper units retract and release the welded panels. These gripper units are then operated by a pneumatic cylinder to return rearwardly along the conveyor 12 to await the arrival of the next prime panel at the contacting station when the above-mentioned operational sequence will again commence.

The spot welding guns continue to weld the convector panel to the prime panel as they are intermittently fed forward. As each weld is made the location finger adjacent to the guns is driven down slightly in advance of the gun to clamp each transverse channel of the convector panel in correct position whilst welding occurs.

This positioning of each channel is intended to correct any error in the distance between the transverse channels of the convector panel, which may occur during its manufacture.

The above-mentioned operations of the apparatus are hydraulically or pneumatically operated and the sequence of operations is controlled and checked electronically. Each movement is part of a sequence, and no part of the sequence can commence until the proceeding operation is completed.

## Claims

1. Apparatus for securing together two generally sheet-like members (4,2) wherein said apparatus includes means operable to convey said members (4,2) in contact with one another to an attachment station, and means (34) for securing together said two members at the attachment station, said apparatus being characterised by a transfer station to receive a first one (4) of said members, a contacting station to receive a second one (2) of said members, a first conveyor (14) to convey the said first one (4) of said members to said transfer station, a second conveyor (12) spaced transversely from the first conveyor (14) to convey intermittently said second one (2) of said members to said contacting station, said first and second members being conveyed generally parallel to one another, a cross-transfer assembly to transfer said first member (4) transversely with respect to said conveying direction from said transfer station to a release station directly above said contacting station, said assembly and said second conveyor (12) being arranged to locate said first and second members (4,2) at the release station and contacting station respectively at the same attitude, release means to allow the first member (4) to drop from said assembly onto said second member (2) at said contacting station ready to be conveyed to said attachment station, gripping means (26,28) to grip said second member (2) as it approaches said contacting station, said gripping means including means to locate the first member when it has dropped onto the second member, and descending means comprising a pivotable plate (24) to ensure that the first member drops onto the second member.

2. Apparatus as claimed in claim 1 characterised in that said gripping means includes a first gripper (26) to hold the second member.

3. Apparatus as claimed in claim 2 characterised in that the first gripper is a finger clamp (26).

4. Apparatus as claimed in any preceding claim characterised in that the gripping means includes location fingers (28) to locate the first member when it has dropped onto the second member.

5. Apparatus as claimed in claim 4 characterised in that the location fingers comprise a double-finger locator.

6. Apparatus as claimed in any preceding claim characterised by guide means to guide laterally the contacting first and second members to the attachment station.

7. Apparatus as claimed in claim 6 characterised in that the guide means comprises two elongate members one on each side of the second conveyor; said members converging towards the attachment station.

8. Apparatus as claimed in any preceding claim characterised in that the securing means (34) is transversely adjustable.

9. Apparatus as claimed in claim 8 characterised in that the securing means (34) comprises welding apparatus.

10. Apparatus as claimed in claim 9 characterised in that the welding apparatus comprises a plurality of spot-welding guns 34.

11. Apparatus as claimed in any preceding claim characterised in that the cross-transfer assembly comprises two longitudinal transversely-spaced locators for the first member.

12. Apparatus as claimed in claim 11 characterised in that the assembly comprises two longitudinal arrays of support members (24) mounted on two pivotal longitudinal shafts (22) carried by respective ones of said locators.

13. A method of securing together two generally sheet-like members (4,2), said method including advancing said two members in unison to an attachment station, securing together said members at the attachment station, and releasing said secured members, said method being characterised by spacing said members (4,2) transversely with respect to one another, feeding a first one (4) of said members to a transfer station, intermittently feeding a second one (2) of said members to a contacting station, said members being fed generally parallel to one another, transferring said first member transversely with respect to said feeding direction to a release station directly above said contacting station, locating the first and second members at the release station and contacting station respectively at the same attitude as one another, and allowing the first member (4) to drop onto the second member (2) to enable said two members to be advanced to said attachment station, gripping the second member (2) as it approaches the contacting station, locating both the members in the correct position relative to each other as they travel from the contacting station to the attachment station, and clamping the two members at the attachment station immediately before the securing operation.

14. A method as claimed in claim 13 characterised by detecting when the second member (2) approaches the contacting station.

15. A method as claimed in claim 13 or claim 14 characterised in that the two members are secured together by welding.

## Patentansprüche

1. Vorrichtung zum Verbinden zweier im wesentlichen plattenförmiger Elemente (4, 2) miteinander, mit Mitteln zum Fördern der in Anlage miteinander befindlichen Elemente (4, 2) zu einer Heftstation, sowie mit Mitteln (34) zum Verbinden der beiden Elemente miteinander in der Heftstation, gekennzeichnet durch eine Transferstation zum Entgegennehmen eines ersten Elements (4), eine Kontaktstation zum Entgegennehmen eines zweiten Elements (2), einen ersten Förderer (14) zum Fördern des ersten Elements (4) zu der Transferstation, einen seitlich beabstandet zu dem ersten Förderer (14) angeordneten zweiten Förderer (12) zum schrittweisen Fördern des zweiten Elements (2) zu der Kontaktstation, wobei das erste und das zweite Element im wesentlichen parallel zueinander gefördert werden, eine Übergabevorrichtung zur Übergabe des ersten Elements quer zu der Förderrichtung von der Transferstation zu einer unmittelbar oberhalb der Kontaktstation angeordneten Freigabestation, wobei die Übergabevorrichtung und der zweite Förderer (12) so angeordnet sind, daß sie das erste (4) und das zweite (2) Element in der gleichen Lage in die Freigabestation bzw. in die Kontaktstation bringen, Freigabemittel, die es dem ersten Element (4) erlauben, aus der Übergabevorrichtung auf das zweite Element (2) in der Kontaktstation zu fallen, damit sie zur Überführung in die Heftstation vorbereitet sind, Greifmittel (26, 28) zum Ergreifen des zweiten Elements (2), sobald es sich der Kontaktstation nähert, wobei die Greifmittel Mittel umfassen, die zum Ausrichten des ersten Elements dienen, nachdem es auf das zweite Element gefallen ist, und Absenkmittel, die eine dreh- oder schwenkbare Platte (24) umfassen, um sicherzustellen, daß das erste Element auf das zweite Element fällt.

2. Vorrichtung nach Anspruch 1, dadurch gekennzeichnet, daß das Greifmittel einen ersten Greifer (26) zum Halten des zweiten Elements umfaßt.

3. Vorrichtung nach Anspruch 2, dadurch gekennzeichnet, daß der erste Greifer ein Finger aufweisender Greifer (26) ist.

4. Vorrichtung nach einem der vorhergehenden Ansprüche, dadurch gekennzeichnet, daß das Greifmittel Positionierfinger (28) umfaßt, die zum Positionieren des ersten Elements dienen, wenn es auf das zweite Element gefallen ist.

5. Vorrichtung nach Anspruch 4, dadurch gekennzeichnet, daß die Positionierfinger einen Positionierer mit zwei Fingern umfassen.

6. Vorrichtung nach einem der vorhergehenden Ansprüche, gekennzeichnet durch Führungsmittel, die die beiden miteinander in Berührung stehenden Elemente (auf dem Weg) zu der Heftstation seitlich führen.

7. Vorrichtung nach Anspruch 6, dadurch gekennzeichnet, daß das Führungsmittel zwei längliche Elemente, je eins auf jeder Seite des zweiten Förderers, aufweist, wobei die Elemente sich zu der Heftstation hin einander annähern.

8. Vorrichtung nach einem der vorhergehenden Ansprüche, dadurch gekennzeichnet, daß das Verbindungsmittel (34) in Querrichtung einstellbar ist.

9. Vorrichtung nach Anspruch 8, dadurch gekennzeichnet, daß das Verbindungsmittel (34) eine Schweißvorrichtung umfaßt.

10. Vorrichtung nach Anspruch 9, dadurch gekennzeichnet, daß die Schweißvorrichtung eine Anzahl von Punktschweißzangen (34) umfaßt.

11. Vorrichtung nach einem der vorhergehenden Ansprüche, dadurch gekennzeichnet, daß die Übergabevorrichtung zwei längliche, in seitlicher Richtung voneinander beabstandete Positionierer für das erste Element umfaßt.

12. Vorrichtung nach Anspruch 11, dadurch gekennzeichnet, daß die Übergabevorrichtung zwei längliche Gruppen von Stützgliedern (24) umfaßt, die an drehbaren, jeweils von einem der Positionierer gehaltenen Wellen (22) angeordnet sind.

13. Verfahren zum Verbinden zweier im wesentlichen plattenförmiger Elemente (4, 2) miteinander, mit den Schritten: gleichzeitiges Fördern der beiden Elemente zu einer Heftstation, Verbinden der beiden Elemente miteinander in der Heftstation, und Freigeben der verbundenen Elemente, gekennzeichnet durch die Schritte: Beabstanden der beiden Elemente (4, 2) voneinander in seitlicher Richtung, Zuführen eines ersten Elements (4) zu einer Transferstation, schrittweises Zuführen eines zweiten Elements (2) zu einer Kontaktstation, wobei die Elemente im wesentlichen parallel zueinander gefördert werden, Überführen des ersten Elements quer zu der Förderrichtung zu einer Freigabestation, die unmittelbar oberhalb der Kontaktstation angeordnet ist, Positionieren des ersten und des zweiten Elements in der Freigabestation bzw. in der Kontaktstation, jeweils in der gleichen Lage wie das andere Element, Fallenlassen des ersten Elements (4) auf das zweite Element (2), damit die beiden Elemente zu der Heftstation weitergefördert werden können, Greifen des zweiten Elements (2), wenn es sich der Kontaktstation nähert, Positionieren der beiden Elemente in der richtigen Stellung zueinander während sie sich von der Kontaktstation zu der Heftstation bewegen, und Einklemmen der beiden Elemente in der Heftstation unmittelbar vor dem Verbindungsvorgang.

14. Verfahren nach Anspruch 13, dadurch gekennzeichnet, daß ermittelt wird, wann das zweite Element (2) sich der Kontaktstation nähert.

15. Verfahren nach Anspruch 13 oder Anspruch 14, dadurch gekennzeichnet, daß die beiden Elemente mittels Schweißen miteinander verbunden werden.

## Revendications

1. Appareil de fixation entre eux de deux organes (4, 2) ayant une forme générale de feuille, l'appareil comprenant un dispositif commandé afin qu'il transporte les organes (4, 2) en contact mutuel à un poste de fixation, et un dispositif (34) de fixation des deux organes l'un à l'autre au poste de fixation, l'appareil étant caractérisé par un poste de transfert destiné à recevoir un premier (4) des organes, un poste de mise en contact destiné à recevoir un second (2) des organes, un premier transporteur (14) destiné à transporter le premier (4) des organes au poste de transfert, un second transporteur (12) distant transversalement du premier transporteur (14) et destiné à transporter le second (2) des organes par intermittence au poste de mise en contact, le premier et le second organe étant transportés en étant parallèles entre eux de façon générale, un ensemble de transfert transversal destiné à transférer le premier organe (4) transversalement à la direction de transport du poste de transfert à un poste de libération juste au-dessus du poste de mise en contact, l'ensemble et le second transporteur (12) étant disposés afin qu'ils positionnent le premier et le second organe (4, 2) au poste de libération et au poste de mise en contact respectivement avec la même attitude, un dispositif de libération destiné à permettre la chute du premier organe (4) depuis l'ensemble sur le second organe (2) au poste de mise en contact, en position prête pour le transport au poste de fixation, un dispositif (26, 28) de serrage du second organe (2) lorsqu'il approche du poste de mise en contact, le dispositif de serrage comprenant un dispositif de positionnement du premier organe lorsqu'il est tombé sur le second organe, et un dispositif de descente comprenant une plaque pivotante (24) destinée à assurer la chute du premier organe sur le second organe.

2. Appareil selon la revendication 1, caractérisé en ce que le dispositif de serrage comprend un premier organe (26) de serrage destiné à maintenir le second organe.

3. Appareil selon la revendication 2, caractérisé en ce que le premier organe de serrage est une pince (26) ayant un doigt.

4. Appareil selon l'une quelconque des revendications précédentes, caractérisé en ce que le dispositif de serrage comprend des doigts (28) de positionnement du premier organe lorsqu'il est tombé sur le second organe.

5. Appareil selon la revendication 4, caractérisé en ce que les doigts de positionnement comportent un organe de positionnement à doigt double.

6. Appareil selon l'une quelconque des revendications précédentes, caractérisé par un dispositif de guidage latéral du premier et du second organe qui sont en contact vers le poste de fixation.

7. Appareil selon la revendication 6, caractérisé en ce que le dispositif de guidage comprend deux organes allongés placés de part et d'autre du second transporteur, les organes convergeant vers le poste de fixation.

8. Appareil selon l'une quelconque des revendications précédentes, caractérisé en ce que le dispositif de fixation (34) est ajustable transversalement.

9. Appareil selon la revendication 8, caractérisé en ce que le dispositif de fixation (34) est un appareil de soudage.

10. Appareil selon la revendication 9, caractérisé en ce que l'appareil de soudage comprend plusieurs pistolets (34) de soudage par points.

11. Appareil selon l'une quelconque des revendications précédentes, caractérisé en ce que l'ensemble de transfert transversal comprend deux organes de positionnement longitudinal espacés transversalement et destinés à coopérer avec le premier organe.

12. Appareil selon la revendication 11, caractérisé en ce que l'ensemble comporte deux groupes longitudinaux d'organes de support (24) montés sur deux arbres longitudinaux pivotants (22) portés par des organes respectifs de positionnement.

13. Procédé de fixation entre eux de deux organes (4, 2) ayant une forme générale de feuille, le procédé comprenant l'avance des deux organes ensemble vers un poste de fixation, la fixation entre eux des organes au poste de fixation, et la libération des organes fixés, le procédé étant caractérisé par l'espacement des organes (4, 2) transversalement l'un par rapport à l'autre, l'avance d'un premier (4) des organes à un poste de transfert, l'avance intermittente d'un second (2) des organes vers un poste de mise en contact, les organes avançant en étant parallèles entre eux de façon générale, le transfert du premier organe transversalement à la direction d'avance vers un poste de libération qui se trouve juste au-dessus du poste de mise en contact, le positionnement du premier et du second organe au poste de libération et au poste de mise en contact respectivement avec la même attitude l'un et l'autre, et la chute libre du premier organe (4) sur le second organe (2) afin que les deux organes puissent avancer vers le poste de fixation, le serrage du second organe (2) lorsqu'il approche du poste de mise en contact, le positionnement des deux organes en position convenable l'un par rapport à l'autre lorsqu'ils se déplacent du poste de mise en contact au poste de fixation, et le serrage des deux organes au poste de fixation juste avant l'opération de fixation.

14. Procédé selon la revendication 13, caractérisé par la détection du moment où le second organe (2) approche du poste de mise en contact.

15. Procédé selon la revendication 13 ou 14, caractérisé en ce que les deux organes sont fixés mutuellement par soudage.
